# EUROPÄISCHE PATENTANMELDUNG

(11) **EP 2 837 841 A1**
(43) Veröffentlichungstag der Anmeldung: **18.02.2015**
(21) Anmeldenummer: 13180420.5
(22) Anmeldetag: 14.08.2013
(51) Int. Cl.: F16D 1/08, F16D 1/09

(54) **Schrumpfscheibe**

(71) Anmelder: Ando, Mahito, 76530 Baden-Baden (DE)
(72) Erfinder: Ando, Mahito, 76530 Baden-Baden (DE)
(74) Vertreter: Geitz Truckenmüller Lucht

(57) **Zusammenfassung**

Die Erfindung betrifft eine Schrumpfscheibe zur kraftschlüssigen Drehmomentübertragung bei einer Welle-Nabe-Verbindung. Im Unterschied zu der aus dem Stand der Technik in Verbindung mit mechanischen Schrumpfscheiben bekannten axialen Krafteinleitung, die mittels eines mechanischen Wandlers in einen radialen Anpressdruck zur Erzeugung eines Kraftschlusses hergestellt wird, wird im Rahmen der erfindungsgemäßen Lösung mittels eines hydraulischen Aktors ein direkter radialer Kraftaufbau bewirkt und mittels einer beidseitigen metallischen Einfassung des hydraulischen Aktors ein Kraftschluss im Bereich der Welle-Nabe-Verbindung hergestellt.

## Beschreibung

Die Erfindung betrifft eine Schrumpfscheibe zur Einleitung eines Drehmomentes von einer Antriebswelle in ein Getriebe.

Derartige Drehmomentübertragungen gehören seit vielen Jahren in der Antriebstechnik zum selbstverständlichen Stand der Technik. Im Bereich der Einleitung von Drehmomenten in die Antriebswelle eines Generators bedarf es notwendigerweise einer kraftschlüssigen Welle-Nabe-Verbindung. In diesem Zusammenhang werden üblicherweise Schrumpfscheiben eingesetzt, die von außen auf die Nabe aufgesetzt werden, wobei durch Verringerung des Innendurchmessers der Schrumpfscheibe, etwa über kegelförmige Pressflächen der Außenteile, Druck auf die Welle ausgeübt wird, bis schließlich eine Presspassung hergestellt ist, also eine kraft- bzw. reibschlüssige Verbindung zwischen Welle und Nabe. Die hierzu erforderliche Vorspannung wird dabei durch hochfeste Schrauben oder mittels einer hydraulischen Spannvorrichtung in jeweils axialer Richtung aufgebracht.

Die Schrumpfscheibe erfüllt in der Einbausituation im wesentlichen zwei Funktionen:
- Übertragung des Drehmomentes während des normalen Betriebszustandes und
- Schutz der Antriebswelle beim Auftreten eines unzulässig hohen Drehmomentspitzes durch Durchrutschen.

Die zweite Funktion erfordert eine kraftschlüssige und keine formschlüssige Drehmomentübertragung. Kraftschlüssige Verbindungen setzen eine Normalkraft auf die miteinander zu verbindenden Flächen voraus. Ihre gegenseitige Verschiebung ist verhindert, solange die durch die Haftreibung bewirkte Gegenkraft nicht überschritten wird. Für eine kraftschlüssige Drehmomentübertragung wird üblicherweise eine Schrumpfscheibe eingesetzt. Die Schrumpfscheibe sitzt dabei üblicherweise auf einer Nabe, die wiederum auf einer Welle sitzt.

Durch Verringerung des Innendurchmessers der Schrumpfscheibe wird Druck auf die Nabe ausgeübt, bis eine Presspassung zwischen Nabe und Welle hergestellt ist, die die Übertragung eines Drehmomentes durch Reib- bzw. Kraftschluss bis zu einem definierten maximalen Drehmoment zulässt.

Die hierzu erforderliche Vorspannung wird dabei durch hochfeste Schrauben oder mittels einer hydraulischen Spannvorrichtung durch Anziehen von zwei Ringen in der axialen Richtung erzeugt. Die dabei entstehende axiale Kraft und Weg werden durch einen mechanischen Wandler in die radiale Spannung und Weg umgewandelt. Der mechanische Wandler ist in der Regel eine Konstruktion mit einer schrägen Gleitfläche. Durch Anziehen der beiden Scheiben in axialer Richtung entsteht in der Gleitfläche eine radiale Kraft, die den gewünschten Kraftschluss zwischen Nabe und Welle bewirkt.

Die aus dem Stand der Technik vorbekannte Drehmomenteinleitung unter Zwischenschaltung des vorstehend erläuterten mechanischen Wandlers erfüllt folgende Funktionen:
1) Erzeugung der axialen Kraft
2) Mechanische Umwandlung axialer Kraft in radiale Kraft
3) Überwindung eines hinreichend großen Spiels zwischen Schrumpfscheibe und Nabe für die Montage durch Bereitstellung eines hinreichend großen radialen Weges.
4) Bereitstellung der hinreichend großen Gegenkraft, um geforderten Anpressdruck auf die Nabe herzustellen.

Die axiale Krafterzeugung zwischen beiden Scheiben wird durch Anziehen von Schrauben oder durch eine hydraulische Spannvorrichtung realisiert. Die Schrumpfscheibe ist somit eine bewährte Vorrichtung der Antriebstechnik und wird darüber hinaus in unterschiedlichsten Anwendungen der Antriebstechnik erfolgreich eingesetzt, darunter auch im Bereich der Windenergie.

Bei der Drehmomentübertragung in der Welle-Nabe-Verbindung zwischen der Hauptwelle und dem Generatorgetriebe einer Windenergieanlage besteht die Anforderung, ein großes Drehmoment bei niedriger Drehzahl zu übertragen. Bei konventionellen Schrumpfscheiben mit einem mechanischen Wandler beobachtet man, dass das Gewicht der Schrumpfscheibe mit dem zunehmenden Drehmoment nicht-linear steigt.

Die Wirtschaftlichkeit der Windenergie ist stark mit dem Gewicht des Antriebsstrangs gekoppelt. Jedes Kilogramm am Antriebsstrang benötigt einen mehrfachen Einsatz hinsichtlich der für die tragenden Strukturen eingesetzten Masse, wie z. B. für Stützkonstruktion der Gondel, insbesondere umfassend den Turm und das Fundament der Windkraftanlage.

Ausgehend von diesem Stand der Technik, liegt der Erfindung die Aufgabe zu Grunde, eine verbesserte Schrumpfscheibe zu schaffen, die gegenüber dem Stand der Technik erhebliche Gewichtsvorteile verspricht und überdies leichter zu montieren ist.

Die Lösung der erfindungsgemäßen Aufgabe gelingt mit einer Schrumpfscheibe mit den Merkmalen des geltenden Anspruchs 1. Vorteilhafte Ausgestaltungen der Erfindung können den abhängigen Ansprüchen 2 bis 15 entnommen werden. Eine vorteilhafte Verwendung der erfindungsgemäßen Schrumpfscheibe ist gemäß den Ansprüchen 16 und 17 gegeben.

Im Rahmen des geltenden Anspruchs 1 ist hierzu anstelle der bekannten Schrumpfscheibe mit einem mechanischen Wandler eine direkte Erzeugung des radialen Anpressdrucks mittels eines hydraulischen Aktors vorgesehen, der wie ein Fahrradschlauch die Nabe umschließt. Der Kraftschluss der Welle-Nabe-Verbindung wird dabei im Unterschied zum eingangs beschriebenen Stand der Technik nicht dadurch erreicht, dass eine Spannvorrichtung zunächst eine axiale Kraft erzeugt, die dann durch einen mechanischen Wandler in eine radiale Kraft umgewandelt wird, sondern in einfacher Weise dadurch, dass der Innendruck des hydraulischen Aktors erhöht wird.

Entscheidend für die Realisierung des direkten radialen hydraulischen Druckes ist dabei der Einsatz eines ringförmigen metallischen Hohlkörpers, der nahtlos ausgebildet ist.

Es ist weiter von Vorteil, wenn der ringförmige metallische Hohlkörper außerdem eine über den gesamten Umfang konstante Wandstärke aufweist.

Der ringförmige metallische Hohlkörper ist ein gemäß dem japanischen Patent JP 2005219083 A hergestellter Metallkörper. Gemäß der erwähnten japanischen Patentschrift wird ein gusseiserner Körper mit einer definierten Außenkontur zunächst einer ersten Wärmebehandlung unterzogen, durch die eine Dekarbonisierung des äußeren Mantels des Gusseisenkörpers bewirkt wird. Der außenliegende Mantel des Körpers weist somit nach der ersten Wärmebehandlung einen niedrigeren Kohlenstoffgehalt auf und besitzt daher eine höhere Schmelztemperatur als das innerhalb des Körpers liegende Vollmaterial. Das innenliegende Vollmaterial des Körpers behält im Wesentlichen seinen ursprünglichen Kohlenstoffgehalt. In einem weiteren Schritt werden geeignete Drainagebohrungen in das innen liegende Vollmaterial des gusseisernen Körpers eingebracht. Dann wird mittels einer zweiten Wärmebehandlung, der der äußere Mantel des Körpers auf Grund seines niedrigeren Kohlenstoffgehalts standhält, das innen liegende Vollmaterial dieses Körpers über die Drainagebohrungen abgelassen. Dies ist möglich, weil dieser Innenkörper einen niedrigeren Schmelzpunkt als der Mantel dieses Körpers besitzt. Der verbleibende metallische Hohlkörper wird dann in der erfindungsgemäßen Schrumpfscheibe als hydraulischer Aktor eingesetzt.

Die Funktion des hydraulischen Aktors beinhaltet eine Volumenveränderung des metallischen Hohlkörpers durch Einleitung des hydraulischen Drucks. Die funktionsgemäße Volumenveränderung des metallischen Hohlkörpers wird dadurch sichergestellt, dass der Hohlkörper gemäß Anspruch 4 eine wesentlich größere Oberfläche durch die definierten Außenkonturen auf der Oberfläche hat, so dass Volumenveränderungen im Rahmen der Applikation im elastischen Bereich stattfinden. Die zusätzliche Oberfläche erlaubt Volumenvergrößerung des metallischen Hohlkörpers durch Hydraulikölzufuhr im vorgegebenen Einbauverhältnis durch Hydraulikdruck, ohne dabei eine unzulässige Streckung des Materials über die Elastizitätsgrenze hinaus zu verursachen.

Der metallische Hohlkörper selbst kann nur sehr begrenzt Kräfte aufnehmen oder übertragen. Er hat daher in der Einbaulage eine so gut wie ausschließlich druckerzeugende Funktion. Die Führungsfunktion übernehmen die Seitenflansche der den Hohlkörper in der Einbaulage untergreifenden U-förmigen Stahlringsegmente. Darüber hinaus haben sie auch eine kraftaufnehmende und -übertragende Funktion.

Die beidseitige Einfassung des Hohlköpers und der in der Einbaulage radial innenliegenden Stahlringsegmente mittels entsprechender Seitenplatten gemäß Anspruch 8, ermöglichen in der Einbaulage bei bestimmungsgemäß druckbeaufschlagtem Hohlkörper die Kraft- und Drehmomentübertragung. Gemäß Anspruch 9 sind die U-förmigen Stahlringsegmente von Innen durch den Hohlkörper und nach außen durch die Seitenplatten eingefasst, so dass sie im druckfreien Zustand selbstjustierend freibeweglich, aber selbsthemmend gelagert sind.

Die erforderliche Volumenvergrößerung des Hohlkörpers gelingt mittels einer ausschließlich zur Montage und Demontage über ein Ventil an den Hohlkörper angeschlossene Hydraulikversorgung. Hierdurch kann der Hohlkörper in einfacher Weise bis zur Herstellung des gewünschten Kraftschlusses druckbeaufschlagt werden.

Bei vollständigem Druckaufbau drückt der metallische Hohlkörper die U-förmigen Stahlringsegmente gegen die Seitenplatten, so dass zwischen den Stahlringsegmenten und den Seitenplatten ein Kraftschluss entsteht, wobei gemäß Anspruch 11 alle Kräfte und Drehmomente, die in der Schrumpfscheibe bei unterschiedlichen Betriebszuständen entstehen, über diesen Kraftschluss abgeleitet werden, jeweils ohne den metallischen Hohlkörper zu belasten.

Durch die direkte radiale Krafterzeugung gemäß Anspruch 12 können mit Vorteil die Vorrichtungen zur axialen Krafterzeugung, insbesondere ein mechanischer Wandler, vollständig entfallen.

Zum Aufbau der erforderlichen Gegenkraft ist der ringförmige metallische Hohlkörper in der Einbaulage von einem zylindrischen Massenring konzentrisch umschlossen, der ebenfalls beidseitig von den Seitenplatten eingefasst ist.

Gemäß Anspruch 13 kann der äußere Massenring zur Bereitstellung der Gegenkraft eine einfache zylindrische Geometrie aufweisen. Dies bewirkt einen großen Kostenvorteil, weil die einfache Geometrie eine automatisierte Fertigung erleichtert.

In weiter vorteilhafter Ausgestaltung kann der Massenring aufgrund seiner einfachen Geometrie kostengünstig aus Verbundwerkstoffen zumindest weitgehend automatisiert hergestellt werden.

Die zylindrische Form des äußeren Ringkörpers bietet zudem gemäß Anspruch 15 die Möglichkeit, den Massenring als Zusammensetzung mehrerer Ringkörper zu gestalten. Etwa durch Einsatz von vergütetem hochfesten Stahl lässt sich hierdurch eine höhere Zugfestigkeit erzielen, wenn die Materialstärke hinreichend klein ist. Damit lässt sich eine relevante Gewichtsreduktion realisieren. Bei einer mehrteiligen Zusammensetzung ist auch eine Auswahl derart möglich, dass der Ringkörper aus Ringen mit jeweils einander unterschiedlicher Materialauswahl zusammengesetzt ist, um damit eine weitere Gewichts- und Kostenoptimierung zu erzielen.

Eine besonders vorteilhafte Verwendung der Schrumpfscheibe ergibt sich in Verbindung mit der Drehmomentübertragung in den Antriebsstrang einer Windkraftanlage. In der Windenergie ist künftig eine Entwicklung dahingehend zu erwarten, dass moderne Windenergieanlagen auch für einen Betrieb an einem Standort mit geringerer Windverfügbarkeit ausgelegt werden müssen, da die Flächen mit hoher Windverfügbarkeit bereits weitgehend ausgereizt sind. Somit werden die Windenergieanlagen bei gleicher Nennleistung einen größeren Rotordurchmesser haben und damit auch ein größeres Nenndrehmoment. Zugleich sollen aber auch die Forderungen nach möglichst hoher Wirtschaftlichkeit erfüllt werden. Hierzu kann ein geringeres Gewicht des Antriebsstranges erheblich beitragen. Der Einsatz der erfindungsgemäßen Schrumpfscheibe gemäß Anspruch 16 erlaubt eine Auslegung, die zur Gewichtsreduktion des Antriebsstranges einen wichtigen Beitrag leistet.

Die Erfindung wird anhand eines in der Zeichnung schematisch dargestellten Ausführungsbeispiels näher erläutert.

Es zeigen
- Figur 1: Eine Welle-Nabe-Verbindung mit einer dem Stand der Technik entsprechenden mechanischen Schrumpfscheibe in einer Quer-schnittsansicht,
- Figur 2: eine Welle-Nabe-Verbindung mit einer hydraulischen Schrumpf-scheibe in einer Querschnittsansicht,
- Figur 3: einen segmentierten Stahlring, der in Figur 2 dargestellten Schrumpfscheibe in einer perspektivischen Ansicht,
- Figur 4: den in Figur 4 dargestellten segmentierten Stahlring in einer Seitenansicht,
- Figur 5: die in Figur 2 dargestellte hydraulische Schrumpfscheibe in einer detaillierten Längsschnittansicht und
- Figur 6: die in Figur 5 dargestellte hydraulische Schrumpfscheibe in einem perspektivischen Ausschnitt.

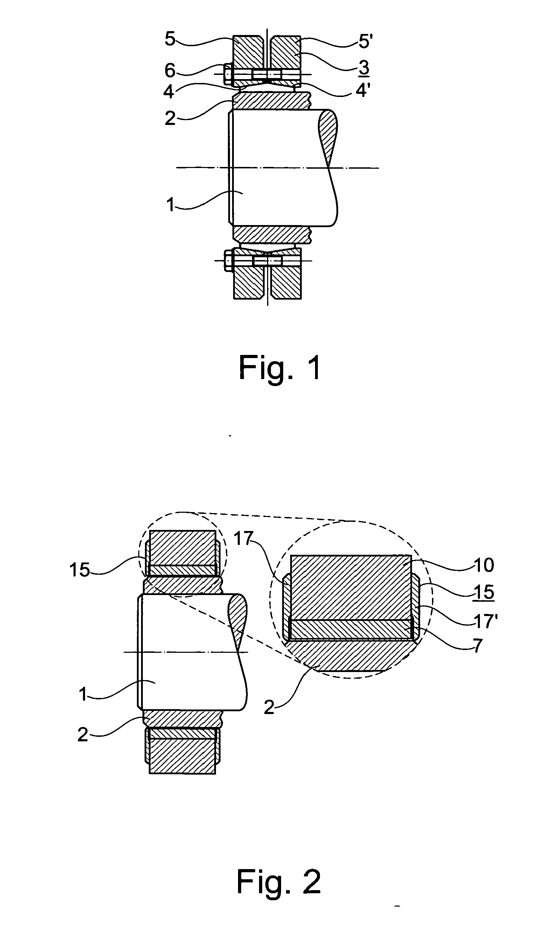

Figur 1 zeigt eine dem Stand der Technik entsprechende mechanische Schrumpfscheibe, wie sie seit vielen Jahren in der Antriebstechnik eingesetzt wird. Die Schrumpfscheibe dient dabei im vorliegenden Falle der Einleitung eines Drehmomentes von einer Antriebswelle 1 in ein Getriebe. Die Schrumpfscheibe erfüllt dabei zwei Funktionen. Zum einen soll ein Drehmoment im normalen Betriebszustand übertragen werden, aber andererseits auch etwa beim Auftreten unzulässig hoher Drehmomentspitzen ein definiertes Durchrutschen realisiert werden, indem der durch die hydraulische Schrumpfscheibe vermittelte konstante Kraftschluss durch Überschreitung der Haftreibung in diesem Fall bestimmungsgemäß im Sinne einer passiven Sicherung unterbrochen wird.

Für die kraftschlüssige Drehmomentübertragung wird üblicherweise eine Schrumpfscheibe eingesetzt, die von außen auf einer Nabe 2 aufgebracht wird, wobei in einem weiteren Schritt durch Verringerung des Innendurchmessers der Schrumpfscheibe Druck auf die Antriebswelle 1 ausgeübt wird, bis eine Presspassung zwischen der Antriebswelle 1 und der Nabe 2 hergestellt ist. In diesem Zustand kann ein Drehmoment durch Reib- bzw. Kraftschluss bis zu einem definierten maximalen Drehmoment übertragen werden.

Gemäß der Darstellung in Figur 1 ist im Stand der Technik eine Antriebswelle 1 von einer Nabe 2 umschlossen, auf der ein mechanischer Wandler 3 aufsitzt. Der mechanische Wandler 3 umschließt die Nabe 2 konzentrisch und besitzt zwei in Richtung einer axial mittig angeordneten Erhebung aufeinander zu laufende schräg angestellte Gleitflächen 4, 4'. Auf diesen Gleitflächen 4, 4' sitzen zwei voneinander in axialer Richtung voneinander beabstandet angeordnete Ringsscheiben 5, 5', die mittels über den Umfang der Ringsscheiben 5, 5' verteilt angeordnete Spannschrauben 6 miteinander verbunden sind.

Die Übertragung des Drehmomentes ist dann sichergestellt, wenn die Ringscheiben 5, 5' im Presssitz auf der Nabe 2 aufsitzen. Hierzu werden die hoch festen Spannschrauben 6 angezogen oder die Ringscheiben 5, 5' mit hydraulischer Hilfe in axialer Richtung zusammengepresst. Im Weiteren wird die eingeleitete axiale Kraft durch den beschriebenen mechanischen Wandler 3 in radiale Kraft umgewandelt. Durch das Anziehen der Ringscheiben 5, 5' entsteht in den Gleitflächen 4, 4' eine radiale Kraft, die den gewünschten Kraftschluss zwischen Nabe 2 und Antriebswelle 1 bewirkt.

Im Ergebnis müssen mit dem mechanischen Wandler 3 bei der dem Stand der Technik entsprechenden Lösung, also folgende Funktionen verwirklicht werden:
- Erzeugung einer axialen Kraft,
- mechanische Umwandlung der eingeleiteten axialen Kraft in eine radiale Kraft,
- Überwindung eines hinreichend großen Spiels zwischen den Gleitflächen 4, 4' und der Nabe 2 durch Bereitstellung eines hinreichend großen radialen Weges in diesem Bereich,
- Bereitstellung einer hinreichend großen Gegenkraft, durch Verwendung entsprechend großer Massen, um den geforderten Anpressdruck auf die Nabe 2 bereitzustellen.

Figur 2 zeigt im Unterschied hierzu eine hydraulische Schrumpfscheibe, bei der vollständig auf den vorstehend erläuterten mechanischen Wandler 3 verzichtet werden kann. Im Unterschied zum Stand der Technik sitzt hier anstelle des mechanischen Wandlers 3 lediglich ein hydraulischer Aktor, der insbesondere durch einen ringförmigen metallischen Hohlkörper 7 realisiert ist, auf der Nabe 2 auf. Dabei umschließt der metallische Hohlkörper 7 die Nabe 2 ringförmig. Auf dem metallischen Hohlkörper 7 sitzt zumindest mittelbar ein die Nabe 2 und den metallischen Hohlkörper 7 umschließender Massenring 10 auf.

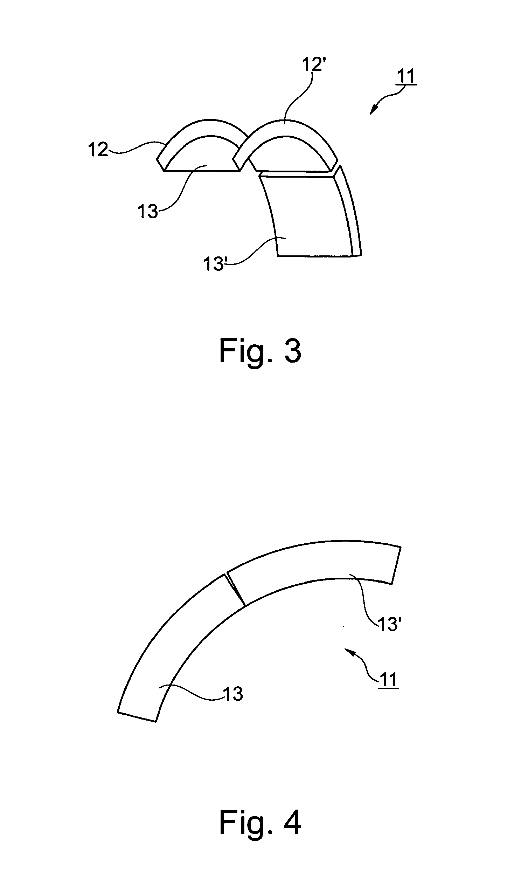

Dabei sitzt der metallische Hohlkörper 7 nicht unmittelbar auf der Nabe 2 auf, sondern vielmehr unter Zwischenlage eines in Figur 3 dargestellten segmentierten Stahlplattenrings 11. Dabei sind die einzelnen Segmente 13, 13' des Stahlplattenrings 11 mit einem U-förmigen Querschnitt versehen, der beidseits von Seitenflanschen 12, 12' begrenzt ist.

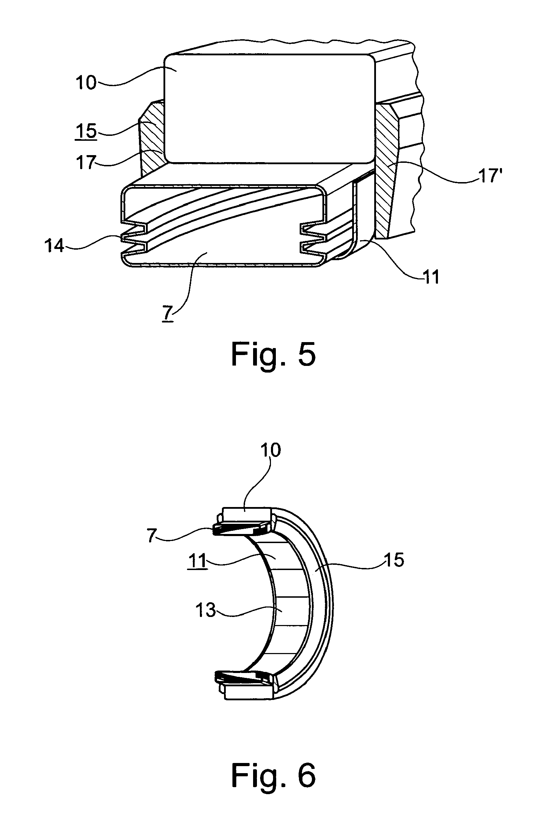

Gemäß Figur 4 ergänzen sich die Stahlringsegmente 13, 13' zu einem die Nabe 2 umschließenden Stahlplattenring 11. Der äußere Umfangskreisbogen der Seitenflansche 12, 12' des Stahlplattenrings 11 ist aufgrund der radialen Geometrie größer als der im Übergangsbereich zwischen den Stahlringsegmenten 13, 13'in die Seitenflansche 12, 12' in radialer Richtung weiter innenliegende, innere Umfangskreisbogen. Damit sind die Stahlplattenringsegmente 13, 13' in der Einbaulage lose, jedoch selbsthemmend und beweglich gelagert. Gemäß Figur 5 ist in der Einbaulage der metallische Hohlkörper 7 zwischen den beiden Seitenflanschen 12, 12' aufgenommen. Dabei ist der metallische Hohlkörper 7 beidseitig mit einer definierten Außenkontur 14 versehen. Sowohl der metallische Hohlkörper 7 als auch der den Hohlkörper 7 radial innen liegend untergreifende Stahlplattenring 11 ist in der Einbaulage beidseitig von einer Seiteneinfassung 15 eingefasst. Dabei fasst in der Einbaulage der radial innenliegende Abschnitt der Seiteneinfassung 15 den metallischen Hohlkörperring 7 mit dem radial weiter innen liegenden Stahlplattenring 11 ein, während radial außen an den Hohlkörper 7 anschließend, aber immer noch innerhalb der Seiteneinfassung 15, der die Anordnung von Stahlplattenring 11 und Hohlkörper 7 konzentrisch umschließende Massenring 10 angeordnet ist.

Der Massenring 10 dient dazu, die Gegenkraft bereitzustellen, wenn der metallische Hohlkörper 7 mittels einer Hydraulikflüssigkeit druckbeaufschlagt und hierdurch die Balgstruktur des Hohlkörpers 7 ausgedehnt wird, wodurch wiederum der segmentierte Stahlplattenring 11 geschlossen an der Nabe 2 anliegt. Außerdem werden durch die Ausdehnung des metallischen Hohlkörpers 7 auch die Seitenflansche 12, 12' an die Seitenplatten 17, 17' der Seiteneinfassung 15 angepresst und ein Kraftschluss hergestellt. Im Ergebnis besteht somit ein Kraftschluss zwischen den Massenringelementen 10 und der Nabe 2.

Der genaue Aufbau des radial innen liegenden segmentierten Stahlplattenrings 11, der beidseitig von der Seiteneinfassung 15 eingefasst ist und radial außen liegend von dem Massenring 10 umfasst ist, kann im Einzelnen dem in Figur 6 perspektivisch dargestellten Ausschnitt entnommen werden.

Wie aus den Figuren 3 bis 6 hervorgeht, handelt es sich bei der hydraulischen Schrumpfscheibe um einen gegenüber dem Stand der Technik deutlich vereinfachten Aufbau. Im Unterschied zu den aus dem Stand der Technik bekannten schrägen Gleitflächen, die aufgrund der Anforderungen spezielle hochvergütete Oberflächen besitzen müssen, bestehen etwa hinsichtlich der Oberfläche des metallischen Hohlkörpers keine besonderen Anforderungen.

Die einfachere Geometrie erlaubt darüber hinaus auch eine kostengünstigere Herstellung der Einzelteile dieser Konstruktion. So kann beispielsweise das Massenringelement 10 als einfacher zylindrischer Ringkörper hergestellt sein, so dass die Herstellung des zylindrischen Ringkörpers aus Verbundwerkstoffen, wie etwa CFK, automatisiert werden kann, wodurch die ansonsten hohen Prozesskosten der CFK-Herstellung wirkungsvoll reduziert werden können. Es kann sich dabei auch um mehrere Zylinderschichten aus verschiedenen Werkstoffkombinationen handeln, um das jeweils gewünschte Verhältnis von Festigkeit, Gewicht und Kosten zu erzielen.

Vorzugsweise werden in diesem Zusammenhang Verbundwerkstoffe zur Herstellung der Massenringelemente 10 eingesetzt. Dies ist angesichts der zu erwartenden Degression der Preise für Verbundwerkstoffe, etwa durch den zunehmenden Einsatz in der Automobilindustrie und der hierdurch zu erreichenden wesentlichen Gewichtseinsparungen ein künftig vielversprechender Ansatz.

Bei der aus dem Stand der Technik bekannten mechanischen Schrumpfscheibe sind die zu beachtenden Auslegungsparameter eng miteinander verflochten und stehen in gegenseitiger Abhängigkeit. Bei der erfindungsgemäßen Lösung lässt sich z.B. das für die Montage notwendige Spiel, d.h. der radiale Hub der Schrumpfscheibe weitgehend ohne zusätzliche Kostenlast vergrößern. Bei der direkten Erzeugung der radialen Kraft ohne mechanischen Wandler hat man daher eine größere Freiheit, die zu beachtenden Parameter unabhängig voneinander zu variieren. So lässt sich bei der erfindungsgemäßen Schrumpfscheibe ein größeres Spiel für eine einfachere Montage realisieren, ohne dabei große Kostennachteile in Kauf nehmen zu müssen

Eine bevorzugte Anwendung der vorstehend beschriebenen hydraulischen Schrumpfscheibe ist die Übertragung von großen Drehmomenten in der Verbindung der Rotorwelle einer Windkraftanlage mit dem Generatorgetriebe, an das die Antriebswelle des Generators angeschlossen ist. Der Antriebsstrang der Windenergieanlage ist üblicherweise im Maschinenhaus der Windkraftanlage in der sogenannten "Gondel" bis zu 160 m über dem Boden angeordnet. Das Gewicht der Antriebswelle bestimmt damit im Wesentlichen die Kosten der Windkraftanlage. In einfacher Näherung müssen für jedes Kilogramm Gewicht des Antriebsstranges bis zu 10 kg Material für tragende Strukturen eingesetzt werden. Durch den Einsatz der erwähnten Verbundwerkstoffe sind Gewichtsreduzierungen für die Schrumpfscheibe bis zu 50 % und mehr denkbar. Dies stellt in Relation zum Antriebsstrang insgesamt eine Gewichtsreduktion von ca 1 % dar.

Der ebenfalls beschriebene deutlich einfachere Aufbau der hydraulischen Schrumpfscheibe bei gleichzeitig größeren Toleranzen und geringerer Oberflächengüte der eingesetzten Elemente reduziert den Fertigungsaufwand weiter, so dass der Vorteil der Gewichtsreduktion nicht mit einem höheren Fertigungsaufwand bezahlt werden muss. Unter Berücksichtigung der möglichen Entwicklung der Werkstoffkosten ist eine preisneutrale Gewichtsreduzierung in naher Zukunft durchaus darstellbar.

Vorstehend ist somit eine neuartige hydraulische Schrumpfscheibe ohne mechanischen Wandler beschrieben, die aufgrund ihrer einfachen Geometrie gegenüber Schrumpfscheiben mit mechanischem Wandler deutliche Fertigungsvorteile besitzt und überdies insbesondere in Verbindung mit einer Windkraftanlage aufgrund der zu erreichenden Gewichtsersparnis für die Antriebswelle des Generators einen spürbaren Beitrag zur Kostenreduktion leistet.

### BEZUGSZEICHENLISTE

- 1: Antriebswelle
- 2: Nabe
- 3: mechanischer Wandler
- 4, 4': Gleitfläche
- 5, 5': Ringscheibe
- 6: Spannschraube
- 7: Hohlkörper
- 10: Massenring
- 11: Stahlplattenring
- 12, 12': Seitenflansch
- 13, 13': Stahlringsegmente
- 14: Außenkontur
- 15: Seiteneinfassung
- 17, 17': Seitenplatten

## Patentansprüche

1. Schrumpfscheibe zur kraftschlüssigen Drehmomentübertragung bei einer Welle/Nabe-Verbindung mit einem direkten radialen Kraftaufbau ohne mechanischen Wandler mittels eines hydraulischen Aktors, der aus einem ringförmigen, metallischen Hohlkörper (7) besteht und dessen Querschnitt von allen vier Seiten eingefasst ist.

2. Schrumpfscheibe nach Anspruch 1, **dadurch gekennzeichnet, dass** der ringförmige metallische Hohlkörper (7) nahtlos ausgebildet ist.

3. Schrumpfscheibe nach Anspruch 1, **dadurch gekennzeichnet, dass** der ringförmige metallische Hohlkörper (7) mit einer durchgehend gleichbleibenden Wandstärke ausgebildet ist.

4. Schrumpfscheibe nach Anspruch 2 oder 3, **dadurch gekennzeichnet, dass** der metallische Hohlkörper (7) aus einem gusseisernen Vollkörper mit einer definierten Außenkontur derart hergestellt ist, dass mittels einer ersten Wärmebehandlung des Vollkörpers die Oberfläche dieses Vollkörpers dekarbonisiert und damit deren Schmelztemperatur, insbesondere im Vergleich zum innenliegenden Vollmaterial des Vollkörpers, erhöht wird und anschließend in einer zweiten Wärmebehandlung das innenliegende Vollmaterial über dessen Schmelzpunkt hinaus erhitzt wird, so dass dieses Vollmaterial durch eine oder mehrere Drainagebohrungen als Schmelze abgelassen wird und der dekarbonisierte metallische, nahtlos ausgebildete Hohlkörper (7) mit einer definierten Außenkontur (14) zurückbleibt.

5. Schrumpfscheibe nach einem oder mehreren der vorhergehenden Ansprüche, **dadurch gekennzeichnet, dass** der metallische Hohlkörper (7) mit derart definierten Außenkonturen (14) versehen ist, dass das Verhältnis der Oberfläche des metallischen Hohlkörpers (7) zum Volumen des Hohlkörpers (7) größer ist, als zum Umschließen des Volumens des Hohlköpers (7) notwendig ist.

6. Schrumpfscheibe nach einem oder mehreren der vorhergehenden Ansprüche, **dadurch gekennzeichnet, dass** der ringförmige metallische Hohlkörper (7) einen in der Einbaulage radial innenliegenden Stahlplattenring (11), bestehend aus sich zu dem Stahlplattenring (11) ergänzenden Stahlringsegmenten (13, 13'), aufweist.

7. Schrumpfscheibe nach Anspruch 6, **dadurch gekennzeichnet, dass** der ringförmige metallische Hohlkörper (7) in der Einbaulage zur Nabe (2) und in beiden axialen Richtungen von Seitenflanschen (12, 12') der im Querschnitt U-förmigen Stahlringsegmente (13, 13') beidseitig eingefasst ist.

8. Schrumpfscheibe nach Anspruch 6 oder 7, **dadurch gekennzeichnet, dass** die Stahlringsegmente (13, 13') und der von diesen eingefasste metallische Hohlkörper (7) in axialer Richtung mittels beidseits angeordneter Seitenplatten (17, 17') jeweils beidseitig eingefasst sind.

9. Schrumpfscheibe nach Anspruch 6, 7 oder 8, **dadurch gekennzeichnet, dass** sich der äußere Umfangskreisbogen, der durch die obere Umlaufkante der Seitenflansche (12, 12') der Stahlringsegmente (13, 13') gebildet ist, größer ist als der in radialer Richtung im Übergangsbereich der Stahlringsegmente (13, 13') in die sich beidseitig jeweils anschließenden Seitenflansche (12, 12') weiter innen liegende innere Umfangskreisbogen, so dass die Stahlringsegmente, (13, 13'), die sich in der Einbaulage zu dem umlaufenden Stahlplattenring (11) ergänzen, in dieser Einbaulage zwischen dem Hohlkörper (7) und den Seitenplatten (15, 15') lose frei beweglich, jedoch selbsthemmend, eingefasst sind.

10. Schrumpfscheibe nach einem oder mehreren der vorhergehenden Ansprüche, **dadurch gekennzeichnet, dass** der metallische Hohlkörper (7) ausschließlich zu Zwecken der Montage oder Demontage bedarfsweise mit einer Hydraulikversorgung unter Zwischenschaltung eines Ventils derart verbunden ist, das der Hohlkörper (7) mittels der über die Hydraulikversorgung eingeleiten Hydraulikflüssigkeit druckbeaufschlagbar und hierdurch eine definierte Volumenvergrößerung des Hohlkörpers (7) bewirkbar ist.

11. Schrumpfscheibe nach einem der Ansprüche 6 bis 10, **dadurch gekennzeichnet, dass** in der Einbaulage bei druckbeaufschlagtem Hohlkörper (7) die Stahlringsegmente (13, 13') selbstjustierend an die radial innenliegende Nabe (2) angepresst werden und hierdurch ein Kraftschluss hergestellt wird.

12. Schrumpfscheibe nach Anspruch 11, **dadurch gekennzeichnet, dass** die Seitenflansche (12, 12') der Stahlringsegmente (13, 13') bei druckbeaufschlagtem Hohlkörper (7) seitlich derart gegen die Seitenplatten (17, 17') gepresst werden, dass zwischen den Stahlringsegmenten (13, 13') und den Seitenplatten (17, 17') eine Kraftübertragung durch Reib- bzw. Kraftschluss bewirkt ist.

13. Schrumpfscheibe nach einem oder mehreren der vorhergehenden Ansprüche 1 bis 12, **dadurch gekennzeichnet, dass** der ringförmige metallische Hohlkörper (7) von einem zylindrischen Massenring (10) derart konzentrisch umschlossen ist, dass auch der radial außenliegende Massenring (10) beidseitig von den Seitenplatten (17, 17') eingefasst ist.

14. Schrumpfscheibe nach Anspruch 12, **dadurch gekennzeichnet, dass** der zylindrische Massenring (10) aus Verbundwerkstoffen, etwa aus kohlenstofffaserverstärktem Kunststoff, hergestellt ist.

15. Schrumpfscheibe nach Anspruch 12 oder 13, **dadurch gekennzeichnet, dass** der zylindrische Massenring (10) durch Zusammenfügen mehrerer Ringe hergestellt ist.

16. Verwendung der Schrumpfscheibe nach den vorherigen Ansprüchen 1 bis 14 zur Einleitung eines Drehmomentes von einer Antriebswelle (1) in ein Getriebe.

17. Verwendung der Schrumpfscheibe nach Anspruch 15 zur Einleitung des Drehmomentes einer Rotorwelle einer Windkraftanlage in einem Generatorgetriebe.
